# EUROPEAN PATENT APPLICATION

(11) **EP 1 182 385 A2**
(43) Date of publication of application: **27.02.2002**
(21) Application number: 01306927.3
(22) Date of filing: 14.08.2001
(51) Int. Cl.: F16J 15/08, F16J 15/06

(54) **Gaskets**

(30) Priority: 23.08.2000 GB 0020831
(71) Applicant: RICARDO CONSULTING ENGINEERS LIMITED, West Sussex BN43 5FG (GB)
(72) Inventor: Thompson, David Ian, Worthing, West Sussex BN11 4RZ (GB)
(74) Representative: Jennings, Nigel Robin

(57) **Abstract**

A laminated automotive gasket comprises two or more layers (2, 4) of material, such as steel, secured together. The outer layer (2) on one side of the gasket has a first hole (5, 16) formed in it which communicates with a liquid passage (8, 22) which is defined within the gasket and communicates with a second hole (6, 24) remote from the first hole formed in the said outer layer (2) or the outer layer (4) on the other side of the gasket. The passage (8, 22) is constituted by a deformed portion (15, 30) of one or both outer layers (2, 4) which extend beyond the remainder of the outer surface of that layer.

## Description

The present invention relates to gaskets, particularly for use in automotive engines, and is concerned with facilitating the transfer of fluids, in particular lubricating oil, around engines, particularly between adjacent components of engines. The invention may in fact be used for such transfer of any type of fluid, e.g. coolant, fuel, brake fluid and the like.

Various components of engines are provided with oil galleries or passages for the distribution of oil under pressure, either for lubrication purposes or to actuate a hydraulic device, such as a chain tensioner. There are several examples of adjoining, connected pairs of items which both have a pressurised oil supply system and in this event it is common for the pressurised oil to be supplied to one component, transferred to the other component and then optionally returned to the first component for recycling. Examples of this are the engine cylinder block and cylinder head and the cylinder block and cam shaft cover. Such adjacent connected pairs of components are usually separated by a sealing gasket which is compressed by the pressure applied by the connecting bolts or the like to form an effective seal between them. For the purpose of transferring the oil from one component to the other, the gasket is conventionally provided with a hole at the position of the opening of the outlet passage in the one component which is necessarily in registry with the opening of the inlet passage in the other component. An upstanding annular sealing rim or bead is commonly provided on both surfaces of the gasket around the hole in it which is compressed by the force applied by the connecting bolts and thus forms a reliable seal and ensures that the oil can not leak between the two components. However, the location at which the oil is required in the other component is invariably offset from the location of the opening of the outlet passage in the one component and it is therefore necessary to provide one or more cross drillings in the other component from the inlet passage to the or each location where the oil is required. These cross drillings are difficult and expensive to manufacture and generally necessitate the provision of blanking plugs to seal the hole through which the drilling was made. Indeed cross drillings frequently have to be made in components to transfer oil or the like from one location to another and all such cross drillings are undesirable for the reasons explained above.

It is known to provide an oil passage in one or both mating surfaces of two engine components which are connected together with the interposition of a gasket. The oil passage constitutes a recess in one or both surfaces and may be used to transfer oil from one location in one component to a further location in the same component or in the other component, and in the latter case a hole is of course provided in the gasket. Whilst the provision of such a passage eliminates the necessity of providing a cross drilling, it is associated with disadvantages because the oil passage is subject to leakage into the space between the surface in question and the opposed surface of the gasket. This problem can only be overcome by ensuring that the fastening bolts are regularly spaced and, usually, are more numerous than would otherwise be necessary and/or by more accurate machining of the opposed surfaces than would otherwise normally be necessary.

Gaskets are frequently a single shaped sheet of material, e.g. a relatively soft metal, such as copper. Multilayer laminated gaskets are also known which typically comprise three layers of e.g. steel riveted or otherwise fastened together, the two outer layers being smooth and flat and the central layer being crimped or corrugated to provide the gasket with a degree of resilience.

It is the object of the present invention to provide means which facilitate the transfer of a fluid, particularly lubricating oil, from one location in a component of an engine to a different location in that component or in some other component connected thereto with the interposition of a gasket.

According to the present invention a laminated gasket comprises two or more layers of material secured together, the outer layer on one side of the gasket having a first hole formed in it which communicates with a liquid passage which is defined within the gasket and communicates with a second hole remote from the first hole formed in the said outer layer or the outer layer on the other side of the gasket.

Accordingly, the gasket of the present invention affords a fluid passage within it communicating with two holes formed on the same side or on opposite sides. In use, the gasket is clamped between two components of an engine and the holes in the gasket are of course aligned with fluid ports in the components. If the two holes are on opposite sides of the gasket the fluid passage will serve to transfer fluid from one location in one component to an offset location in the other component. If the two holes are in the same side of the gasket the passage merely serves to transfer fluid from two spaced locations within the same component, or two components on the same plane. In both cases, the gasket eliminates the necessity of forming the cross-drilling that would otherwise be necessary.

The gasket may have more than two layers of material secured together but in the simplest embodiment it comprises only two layers. In one preferred embodiment the passage is constituted by a deformed portion of one or both outer layers which extends beyond the remainder of the outer surface of that layer. Such a deformation or indentation may readily be made in manufacture, e.g. by stamping, before connecting the layers together. Alternatively, the gasket may have three layers, the passage being constituted by an elongate aperture in the central layer which communicates with the holes in the two outer layers. Whilst this construction necessitates the provision of an additional layer in the gasket it means that the outer surfaces of the gasket may be wholly flat and not provided with one or more projections at the position of the fluid passage.

It will of course be appreciated that the gasket may define two or more passages and these may each communicate with respective inlet and outlet holes formed in the outer layers of the gasket or they may communicate, for instance, with a common inlet hole but a respective outlet hole. If it is necessary for two or more passages to cross over one another but not to communicate with one another it will be necessary for the gasket to include one or more additional intermediate layers which will permit the passages to be defined between different adjacent pairs of layers.

In order to ensure that there is no liquid leakage and that there is a completely sealed interface between the margin of the holes and the margin of the liquid port in the adjacent engine component it is preferred that there is an annular sealing projection extending around at least the first opening. For many applications there will be such an annular projection around each opening. This projection is preferably integral with the layer in which the hole is formed which enables it to be produced very simply in the course of manufacture of the gasket. It is also preferred that the metallic annular projection carries a layer of resilient, e.g. elastomeric, sealing material which is positioned to contact the opposed surface of the engine component.

If the passage within the gasket is constituted by a deformed portion or indentation of one or both outer layers, thereby producing a corresponding projection on the outer surface of one or both layers, it is of course important that this projection is not squashed in use of the gasket since otherwise no liquid could flow through the passage. There is no need for the gasket to be supported in the region of the passage but if the two opposed surfaces of the components between which the gasket is clamped approach one another very closely it is necessary to provide a relief or recess in them at a position corresponding to that of the projection on the gasket. Such a recess may readily be formed during manufacture without difficulty because its precise dimensions are not crucial. However, the surfaces of the components must be in sealing contact with the gasket around at least the first opening, and in many cases all the openings, in order to prevent leakage of the liquid and if the projection corresponding to the liquid passage were in the layer in which the hole is formed this would inevitably result in damage to the passage when the two components are bolted together. It is therefore preferred that that portion of the passage which communicates with at least one of the openings is constituted by a deformed portion of that one of the outer layers in which the said one of the openings is not formed. If a reliable oil seal is required around both openings this means in practice that if both openings are formed in the same outer layer the projection corresponding to the fluid passage will be formed solely on the other outer layer. If, however, the two openings are in opposite outer layers it will be necessary for the liquid passage to move from one side of the gasket to the other over the course of its length so that at each of its ends it is provided on the side of the gasket opposite to the opening.

As mentioned above, the gasket may have a single inlet opening and a plurality of outlet openings, e.g. on the other side of the gasket. In one embodiment, the outlet openings are constructed as spray nozzles which will render the gasket suitable for directly supplying lubricating oil to a plurality of spaced positions, e.g. to the cam lobes within a rocker box. The use of such a gasket for supplying lubricating oil therefore eliminates the necessity of providing a plurality of individual supply pipes and associated spray nozzles.

The construction of the gasket in accordance with the invention readily lends itself to incorporating one or more mechanical devices or sensors, such as a non-return valve, a pressure transducer or a temperature transducer.

The invention also embraces an engine including two components which have engagement surfaces and are connected together by fastening bolts or the like with the engagement surfaces opposed to one another with the interposition of a gasket of the type referred to above. If the liquid passage is constituted by a deformation or depression in one or both outer layers, one or both of the engagement surfaces will be relieved or recessed in the vicinity of the projection or projections corresponding to the liquid passage.

Further features and details of the invention will be apparent from the following description of three specific embodiments which is given by way of example with reference to the accompanying drawings, in which:
Figure 1 is a highly diagrammatic plan view of a gasket in accordance with the invention;
Figures 2 and 3 are sectional views on the lines A-A and B-B in Figure 1, respectively;
Figure 4 is an exploded perspective view of an alternative construction of gasket in situ in an engine; and
Figure 5 is a highly schematic scrap perspective view of a gasket for use with a rocker box cover.

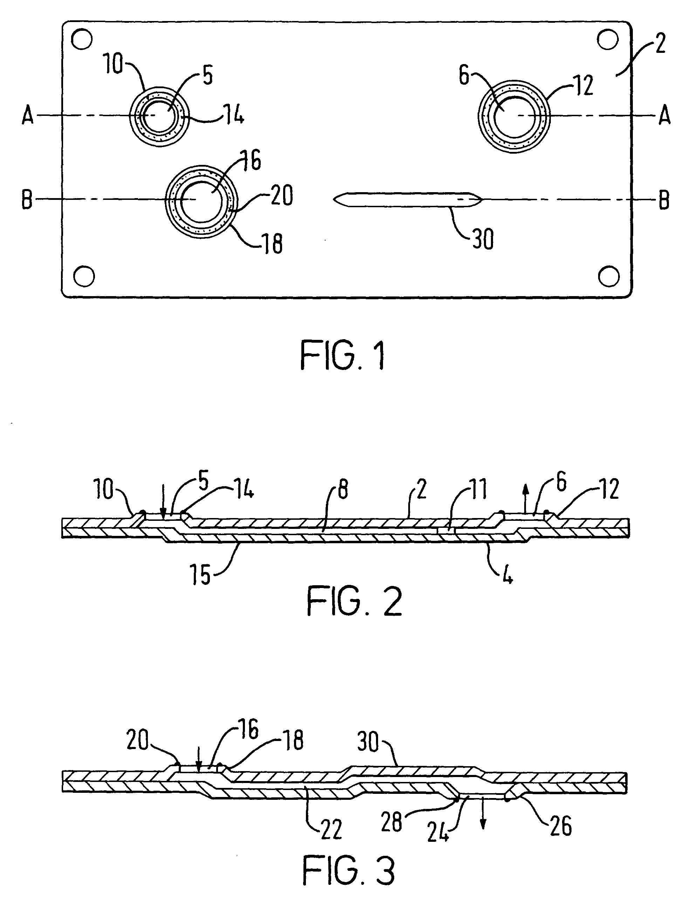

The gasket illustrated in Figures 1 to 3 does not have a specific application but is a hypothetical construction whose purpose is to illustrate the principle of the invention. It comprises two layers 2, 4 of steel connected together by adhesive. The upper layer 2 has two spaced holes 5, 6 formed in it connected together by a passage 8 defined between the two layers 2, 4. Surrounding the holes 5, 6 is a respective upstanding metallic lip 10, 12, on each of which is a thin annular rim 14 of elastomeric sealing material. The passage 8 is constituted by an elongate depression stamped into the lower layer 4 during the course of manufacture, which is visible as an elongate projection 15 on the underside of the gasket.

Also formed in the upper layer 2 is a further hole 16 which is also surrounded by an upstanding annular rim 18 surmounted by a bead of sealing material 20. The hole 16 communicates with a further passage 22 defined within the gasket which also communicates with a further hole 24 formed in the lower layer 4. The hole 24 is also surrounded by an annular metallic upstanding rim 26 surmounted by an annular bead of sealing material 28. The passage 22 is constituted, at its end closest the hole 16, by an elongate depression stamped into the lower layer 4 and, at its end closest to the hole 24, by an elongate depression stamped into the upper layer 2. The depressions or channels stamped into the layers result in corresponding elongate projections on the outer surfaces of the layers and the projection corresponding to the depression formed adjacent the hole 24 may be seen in Figure 1 and is designated 30.

The gasket is manufactured by stamping the two sheets 2, 4 from a larger sheet of steel. At the same time or subsequently the various holes are stamped out and the surrounding integral upstanding beads formed and the depressions which will constitute the passages are also stamped in. The two layers are then connected together by adhesive and this adhesive connects the two layers together over their entire area and thus reliably seals the passages within the gasket. At the time the two layers are connected together a mechanical or electrical element, such as a non-return valve, a pressure transducer or a temperature transducer, may be sealed into one or more of the passages, as illustrated diagrammatically at 11 in Figure 2.

In use, the gasket is clamped between two components of an engine, e.g. by means of bolts which are passed through the holes 32 at the corners of the gasket. The holes 5, 6, 16, 24 are positioned to register with fluid ports formed in the components and as the bolts are tightened the sealing lips are forced into sealing contact with the adjacent surface of the component and thus form a fluid seal around each fluid port. This seal is rendered perfectly fluid-tight by the elastomeric sealing beads. The passages within the gasket need not be supported but if the components have closely approaching engagement surfaces, these surfaces are recessed at positions corresponding to those of the projections corresponding to the passages. There is no need for any precision in the dimensions of these recesses and all that is important is that the components do not engage the projections and thus squash and therefore constrict or block the passages within the gasket. It will be appreciated that the passage 8 serves to transmit fluid between two different locations in the same component whereas passage 22 serves to transmit fluid between two offset locations in separate but adjoining components, in both cases without the necessity of forming cross drillings in the components.

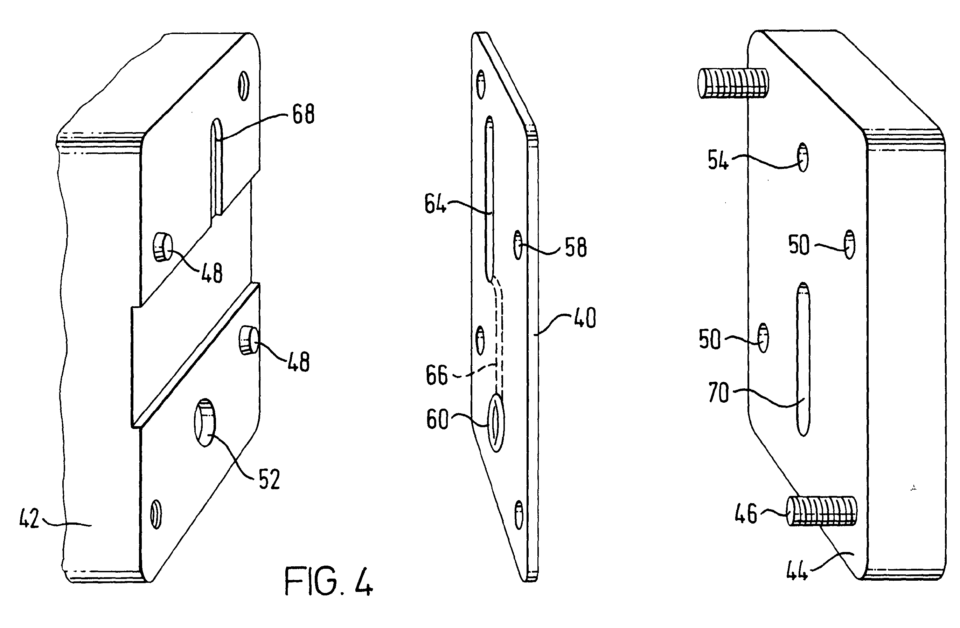

Figure 4 shows a modified gasket 40 with only a single oil passage in it similar to the passage 22 seen in Figure 3. The gasket is positioned between two components of an engine, in this a cylinder block 42 and a timing chain housing 44 connected together by bolts 46. Additional positional location is provided by two projections 48 on the cylinder block which locate within corresponding recesses 50 in the housing 44. The cylinder block is provided with an oil outlet hole 52, offset from which is an oil inlet hole 54 in the housing 44.

The gasket 40 comprises two sheets of steel secured together by adhesive. Formed in it are two holes 56, through which the fastening bolts 46 pass, two holes 58, through which the locating projections pass, an oil inlet hole 60 on one side of the gasket in registry with the hole 52 and an oil outlet hole 62 on the other side of the gasket in registry with the hole 54. The holes 60 and 62 are again formed with an upstanding peripheral lip carrying a bead of elastomeric material.

The oil passage in the gasket is constituted over one half of its length closest to the outlet hole 62 by an indentation in one of the steel layers, which is visible as an elongate projection 64 on one side of the gasket and over the other half of its length closest to the inlet hole 60 by an indentation in the other of the steel layers which is visible as an elongate projection 66 on the other side of the gasket. The projections 64 and 66 are situated on sides of the gasket opposite to that on which the hole 62, 60 to which they are respectively closest is situated. The cylinder block 42 and housing 44 have opposed surfaces between which the gasket is clamped. These surfaces do not necessarily firmly engage the gasket over their entire area but they must do so in the vicinity of the outlet hole 52 and the inlet 50 to ensure that the gasket forms a tight seal around these holes. In order to ensure that the projections 64 and 66 are not crushed, the cylinder block 42 and housing 44 afford respective elongate recesses 68 and 70 in their opposed surfaces which are sized and positioned to receive the projections. These recesses are cast in position but could be subsequently machined and their precise size and position is not crucial.

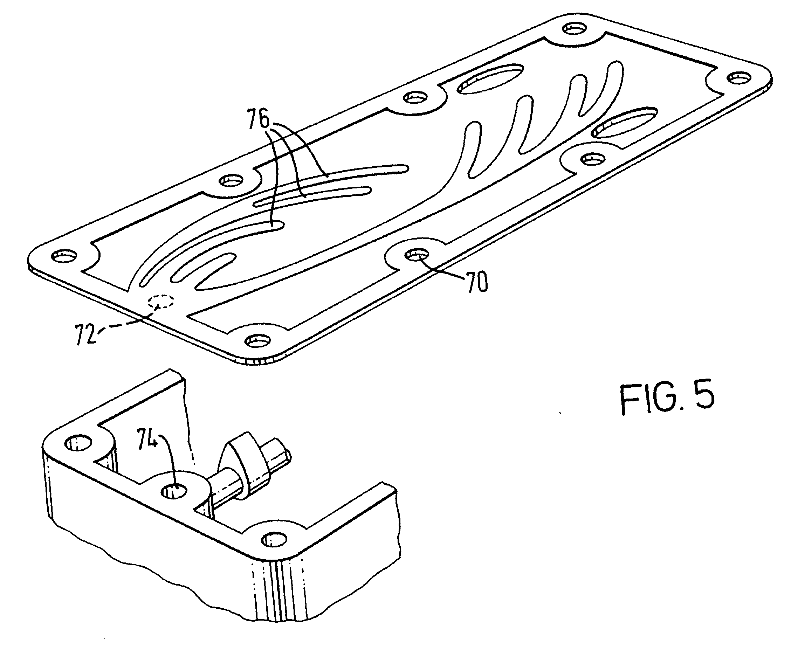

The gasket illustrated diagrammatically in Figure 5 is for forming a seal between an automotive cylinder head and a rocker box cover. An automotive rocker box generally has a pressure lubricating oil supply passage connected to a plurality of feed pipes terminating with respective spray nozzles arranged to spray oil onto each cam. However, the illustrated gasket is responsible not only for sealing the rocker box cover but also for supplying oil to the numerous locations at which it is required.

The gasket is provided with a plurality of bolt holes 70 and a single oil inlet hole 72, which is substantially the same as the inlet holes 4 and 16 described above and, in use, is in sealed communication with an oil outlet port 74 in the rocker box, which is shown only indicatively and in part. The inlet hole 72 communicates with a plurality of oil supply passages 76 within the gasket, which are made by a method similar to that described above. The oil passages 76 terminate at regularly spaced positions along the centre line of the rocker box corresponding to the positions of the cams. Each passage 76 terminates in a very small hole (not visible) which acts as a spray orifice. In use, pressurised oil is supplied to the inlet hole 72 and passes from there through the passages 76 from which it is sprayed directly from the gasket onto the locations where lubrication is required.

## Claims

1. A laminated gasket comprising two or more layers (2, 4) of material secured together, **characterised in that** the outer layer (2) on one side of the gasket has a first hole (5, 16) formed in it which communicates with a liquid passage (8, 22) which is defined within the gasket and communicates with a second hole (6, 24) remote from the first hole formed in the said outer layer (2) or the outer layer (4) on the other side of the gasket.

2. A gasket as claimed in Claim 1 in which the passage (8, 22) is constituted by a deformed portion (15, 30) of one or both outer layers (2, 4) which extends beyond the remainder of the outer surface of that layer.

3. A gasket as claimed in Claim 1 or 2 including an annular projection (10) around at least the first hole (5, 16).

4. A gasket as claimed in Claims 2 and 3 in which that portion of the passage (15, 30) which communicates with one of the holes (5, 16, 6, 24) is constituted by a deformed portion of that one of the outer layers (2, 4) in which the said one of the openings is not formed.

5. A gasket as claimed in any one of the preceding claims in which the liquid passage communicates with a plurality of second holes formed in the outer layer on the other side of the gasket.

6. A gasket as claimed in Claim 5 in which the plurality of second holes is constructed as spray nozzles.

7. A gasket as claimed in any one of the preceding claims in which the passage (8, 22) includes a mechanical or electrical element 11, such as a non-return valve, a pressure transducer or a temperature transducer.

8. An engine including two components (42, 44) which have engagement surfaces and are connected together by fastening bolts (46) or the like with the engagement surfaces opposed to one another with the interposition of a gasket (40), **characterised in that** the gasket is as claimed in any one of the preceding claims and that at least one of the engagement surfaces is relieved in the vicinity of the liquid passage (64, 66).
